# EUROPEAN PATENT SPECIFICATION

(11) **EP 2 975 499 B1**
(45) Date of publication and mention of the grant of the patent: **29.09.2021**
(21) Application number: 14814644.2
(22) Date of filing: 16.05.2014
(51) Int. Cl.: G06F 3/041, G06F 3/0488

(54) **METHOD AND APPARATUS FOR PREVENTING MISOPERATION ON TOUCHSCREEN EQUIPPED MOBILE DEVICE**
VERFAHREN UND VORRICHTUNG ZUR VERHINDERUNG VON FEHLBEDIENUNG EINER MOBILEN VORRICHTUNG MIT EINEM BERÜHRUNGSBILDSCHIRM
PROCÉDÉ ET APPAREIL POUR PRÉVENIR UNE FAUSSE MANOEUVRE SUR UN DISPOSITIF MOBILE ÉQUIPÉ D'UN ÉCRAN TACTILE

(30) Priority: 21.06.2013 CN 201310248489
(43) Date of publication of application: 20.01.2016
(73) Proprietor: ZTE Corporation, Shenzhen, Guangdong 518057 (CN)
(72) Inventor: DAI, Zhiqiang, Shenzhen Guangdong Province 518057 (CN)
(74) Representative: Novagraaf Technologies
(86) International application number: PCT/CN2014/077727
(87) International publication number: WO 2014/201927

(56) References cited:
- CN-A- 102 025 913
- CN-A- 102 117 140
- CN-A- 102 346 596
- CN-A- 102 830 844
- US-A1- 2011 063 491
- US-A1- 2011 254 792
- US-A1- 2011 316 807
- US-A1- 2012 105 481
- US-A1- 2013 088 445
- US-A1- 2013 201 118

## Description

### Technical Field

The present invention relates to the mobile communications field, and in particular to a method and device for preventing touch screen mobile equipment from misoperation.

### Background

In recent years, influence of rapid development of mobile communications on daily life of a user increases every day. Mobile equipment such as mobile phones, pads and notebook computers emerge one after another, and are upgraded faster and faster and popularized at a higher and higher rate. Along with development of hardware, touch screen mobile equipment is gradually developed towards a large screen trend, for example, the note series launched by Samsung sweep around the world. In addition, many mobile equipment manufacturers become more and more inclined to a narrow-edge design during designing, so that lighter and thinner products are produced, and screens with larger areas are arranged under the same body sizes to achieve higher user experiences.

However, after the adoption of the narrow-edge design, much mobile equipment such as mobile phones, pads and notebook computers may have the following problem:
When the user grasps/holds/takes mobile equipment with the narrow-edge design with a single hand or double hands after the mobile equipment is normally unlocked, at least one finger or at least one palm may inevitably touch the screen, which may easily cause misoperation.

US 2011/063491 A1 discloses a digital photographing apparatus and a method of controlling the digital photographing apparatus to prevent a touch malfunction from occurring while holding the digital photographing apparatus by having a touch protection area in the digital photographing apparatus. The digital photographing apparatus includes a large-sized touch screen on one surface thereof, wherein the touch screen includes: a touch area which inputs a touch from a user and executes icons corresponding to the touch, and a touch protection area which is not activated by the touch when the touch from the user is input on the touch screen.

US 2011/316807 A1 discloses a device and method for detecting a touch of a human hand on an interactive area of a user interface display of a mobile device, and displaying a non-interactive area on the user interface display in at least a location of the touch of the human hand. A user may touch a location on the interactive area of the user interface display to indicate that the non-interactive area was incorrectly displayed. Once the user indicates that the non-interactive area is incorrectly displayed, the non-interactive area is removed and replaced with an interactive user interface display.

CN 102 830 844 A discloses a method and apparatus for preventing an accidental touch operation. The method includes determining, when detecting a touch point in a display area on a touch screen, whether the touch point is within an invalid touch area based on the detected touch point in the display area, and making a response to the touch point only if it is determined that the touch point is not within the invalid touch area. If it is determined that the touch point is within the invalid touch area, no response to the touch point is made.

US 2013/088445 A1 discloses a method for controlling a touch screen of a portable terminal. The method includes detecting a start signal and deactivating an edge region of the touch screen in response to the start signal. Moreover, the method includes detecting an end signal and activating the deactivated edge region and displaying content on the entire region of the touch screen in response to the end signal.

### Summary

The embodiments of the present invention provides a method and device for preventing touch screen mobile equipment from misoperation, which may better solve the problem of misoperation over the touch screen mobile equipment with a narrow-edge design.

According to one aspect of the present invention, a method as set out in independent claim 1 is provided.

According to another aspect of the present invention, a device as set out in independent claim 4 is provided.

The dependent claims define advantageous embodiments of the present invention.

The embodiments of the present invention have beneficial effects as follows:
by the embodiment of the present invention, probabilistic misoperation caused by the narrow-edge design of the screen can be effectively avoided, a good user experience is achieved, and usability of a mobile phone is improved.

### Brief Description of the Drawings

Fig. 1 is a flowchart of a method for preventing touch screen mobile equipment from being misoperation according to an embodiment of the present invention;
Fig. 2 is a structural diagram of a device for preventing touch screen mobile equipment from being misoperation according to an embodiment of the present invention;
Fig. 3 is a layout schematic diagram of a common application User Interface (UI) of intelligent mobile equipment according to an embodiment of the present invention;
Fig. 4 is a schematic diagram of a supporting principle of an intelligent system framework according to an embodiment of the present invention;
Fig. 5 is a schematic diagram of a related setting interface of a function plug-in for preventing touch screen mobile equipment from being misoperation in mobile equipment according to an embodiment of the present invention;
Fig. 6 is a schematic diagram of a dashed box displayed by a plug-in when a misoperation area is triggered according to an embodiment of the present invention;
Fig. 7 is a schematic diagram of temporal elimination of a misoperation area and full-screen operation according to an embodiment of the present invention; and
Fig. 8 is a flowchart of operation after a dashed box appears according to an embodiment of the present invention.

### Detailed Description of Embodiments

The example embodiments of the present invention are described below with reference to the drawings in detail, and it should be appreciated that the example embodiments described below are only adopted to describe and explain the present invention and not intended to limit the scope of the present invention as defined by the appended claims.

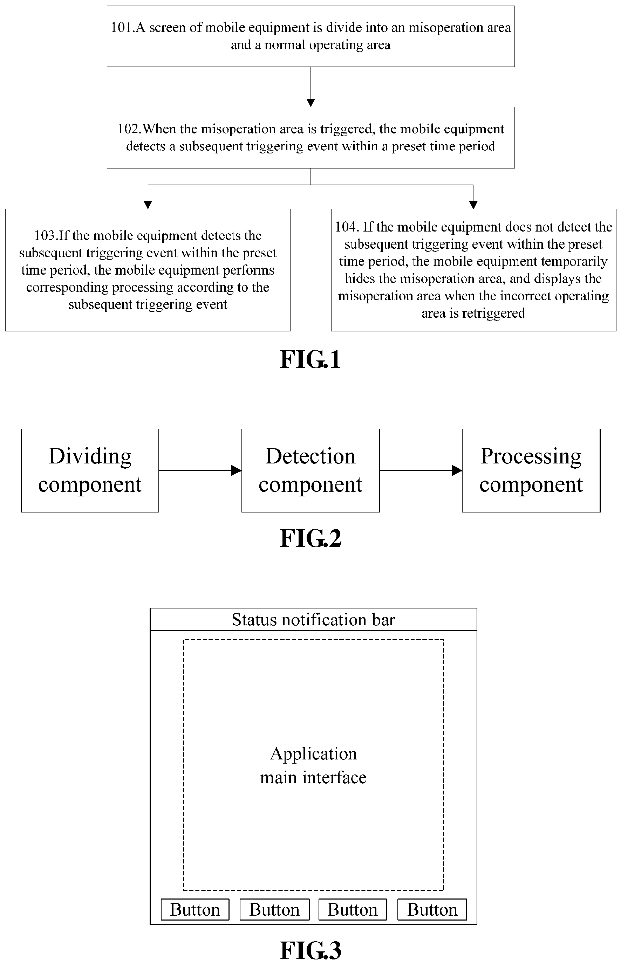

Fig. 1 is a flowchart of a method for preventing touch screen mobile equipment from misoperation according to an embodiment of the present invention, and as shown in Fig. 1, the method includes the following steps:
Step 101: a screen of the mobile equipment is divide into a misoperation area and a normal operating area.
Step 102: when the misoperation area is triggered, the mobile equipment detects a subsequent triggering event within a preset time period.
Step 103: if the mobile equipment detects the subsequent triggering event within the preset time period, the mobile equipment performs corresponding processing according to the subsequent triggering event.

Step 103, the mobile equipment performs corresponding processing according to the subsequent triggering event includes: the mobile equipment judges whether the subsequent triggering event is a triggering event for temporarily eliminating the misoperation area or not, and if the subsequent triggering event is the triggering event for temporarily eliminating the misoperation area, the mobile equipment temporarily closes the misoperation area to enable a user to perform full-screen operation during a current screen unlocking time period.

Step 103, the mobile equipment performs corresponding processing according to the subsequent triggering event further includes: the mobile equipment judges whether the subsequent triggering event is a triggering event for permanently eliminating the misoperation area or not, and when the subsequent triggering event is the triggering event for permanently eliminating the misoperation area, the mobile equipment permanently closes the misoperation area to enable the user to perform full-screen operation during the current screen unlocking time period and subsequent screen unlocking time periods until the misoperation area is reopened.

Step 103, the mobile equipment performs corresponding processing according to the subsequent triggering event further include that: if the subsequent triggering event is not the triggering event for temporarily eliminating the misoperation area or the triggering event for permanently eliminating the misoperation area, the mobile equipment does not perform processing.

Step 104: if the mobile equipment does not detect the subsequent triggering event within the preset time period, the mobile equipment temporarily hides the misoperation area, and displays the misoperation area when the misoperation area is retriggered.

The misoperation area is an area at a distance of a preset length far away from an edge of the screen.

According to the embodiment of the present invention, for a narrow-edge design trend of the touch screen mobile equipment, unconscious misoperation when at least one finger or at least one palm hold the mobile equipment can be effectively prevented, and the embodiment of the present invention is particularly suitable for large-sized mobile equipment with a narrow-edge design and an operating system.

Fig. 2 is a structural diagram of a device for preventing touch screen mobile equipment from misoperation according to an embodiment of the present invention, and as shown in Fig. 2, the device includes a dividing component, a detection component and a processing component, wherein
the dividing component is configured to divide a screen of the mobile equipment into a misoperation area and a normal operating area;
the detection component is configured to, when the misoperation area is triggered, detect a subsequent triggering event within a preset time period; and
the processing component is configured to, if the subsequent triggering event is detected within the preset time period, perform corresponding processing according to the subsequent triggering event, and if the subsequent triggering event is not detected within the preset time period, temporarily hide the misoperation area, and display the misoperation area when the misoperation area is retriggered. The processing component includes:
   a first judgment sub-component, configured to judge whether the subsequent triggering event is a triggering event for temporarily eliminating the misoperation area or not;
   a first processing sub-component, configured to, if the subsequent triggering event is the triggering event for temporarily eliminating the misoperation area, temporarily close the misoperation area to enable a user to perform full-screen operation during screen unlocking time period;
   a second judgment sub-component, configured to judge whether the subsequent triggering event is a triggering event for permanently eliminating the misoperation area or not;
   a second processing sub-component, configured to, when the subsequent triggering event is the triggering event for permanently eliminating the misoperation area, permanently close the misoperation area to enable the user to perform full-screen operation during this and subsequent screen unlocking time period until the misoperation area is reopened; and
   a holding sub-component, configured to, if the subsequent triggering event is not the triggering event for temporarily eliminating the misoperation area or the triggering event for permanently eliminating the misoperation area, not perform processing.

According to the device provided by the present invention for preventing the touch screen mobile equipment from misoperation, when at least one palm or at least one finger holds large-sized touch screen mobile equipment with a narrow-edge design, misoperation caused by unconscious touch over an edge of the screen can be prevented.

Fig. 3 is a layout schematic diagram of a common application UI of intelligent mobile equipment according to an embodiment of the present invention. As shown in Fig. 3, when a user handholds mobile equipment, areas which are easily accidentally operated are different due to different handholding manners. For example, when the user vertically handholds the mobile equipment, areas located at left, right and lower parts of the mobile equipment close to a dashed box are most easily accidentally operated; and when the user horizontally handholds the mobile equipment, either areas located at left, right and lower parts of the mobile equipment close to the dashed box or all edge areas may be easily accidentally operated. Fig. 3 shows the dashed box for distinguishing a misoperation area from a normal area according to the embodiment, the normal area is within the dashed box, and the misoperation area is outside the dashed box.

In the embodiment of the present invention, the misoperation area is distinguished from the normal area through a rectangular dashed box, and during a practical application, combinations of various shapes such as a rectangular solid box and an elliptical dashed box and lines may further be adopted as long as the user is clear about the misoperation area and the normal area. It needs to be noted that the user may set and regulate a position, size and shape of the misoperation area.

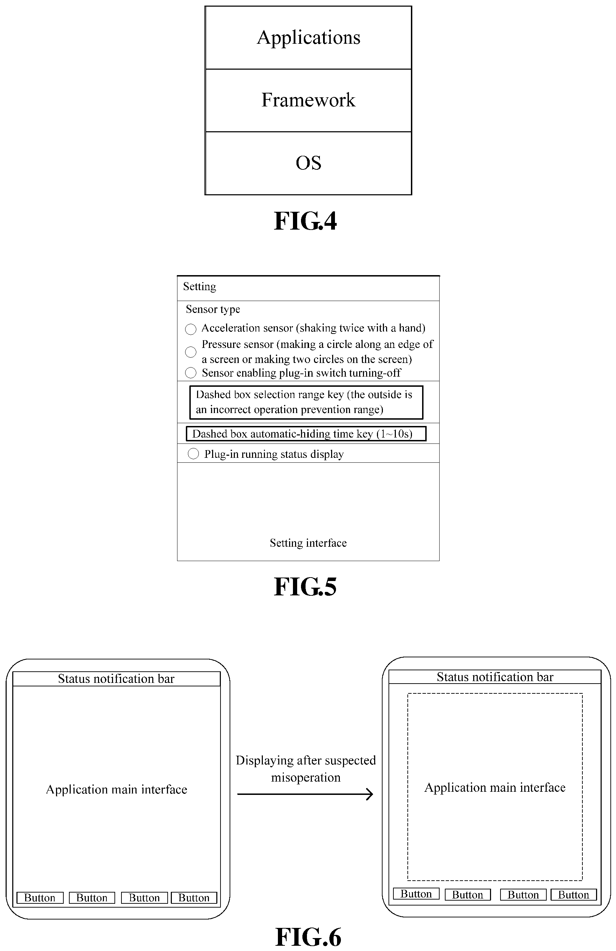

Fig. 4 is a schematic diagram of a supporting principle of an intelligent system framework according to an embodiment of the present invention, and as shown in Fig. 4, the method and device of the present invention are applied to an Application layer to expand view classes, and are activated in interfaces such as a home page program and an application program as well as a running subprogram interface.

Fig. 5 is a schematic diagram of a related setting interface of a function plug-in for preventing touch screen mobile equipment from misoperation in mobile equipment according to an embodiment of the present invention, and as shown in Fig. 5, there are three option bars and a status bar in the related setting interface of the function plug-in.

The first option bar is a sensor type option bar, including sensor type options and turning-off sensor enabling plug-in switch. Wherein, a sensor in RadioGroup is adopted for mobile equipment in a handheld mode, and in the embodiment, an acceleration sensor (for example, the user enables or disables the function plug-in by virtue of operation of shaking the mobile equipment once or for many times and the like) and a pressure sensor (for example, the user enables or disables the function plug-in by making one or more circles along the edge of the screen of the mobile equipment) may be selected; and turning-off sensor enabling plug-in switch is used for forcibly turning on or turning off a sensor plug-in switch, and after turning-off sensor enabling plug-in switch is selected, a forcible turning-on mode for forcibly turning on the sensor plug-in switch and a forcible turning-off mode for forcibly turning off the sensor plug-in switch appear.

The second option bar is a dashed box selection range key, including selection of the position, size, width and the like of the dashed box shown in Fig. 3.

The third option bar is a dashed box automatic-hiding time key, including ten options 1∼10s, that is, preset time period of the function plug-in is selected.

The fourth status bar is a status bar of the function plug-in, i.e. "plug-in running status display". After the status bar is selected, when the function plug-in runs in background, an identifier (for example, a cartoon icon) of the function plug-in may be displayed in a status notification bar shown in Fig. 3, and specifically, if the function plug-in is currently in a running status, a solid identifier is displayed in the status notification bar; if the function plug-in is currently in a temporarily disabled status, a dashed identifier is displayed in the status notification bar; and if the function plug-in is currently in a permanently disabled status, the identifier is not displayed in the status notification bar. When the identifier of the function plug-in is displayed in the status notification bar, the status notification status is pulled down, the function plug-in is clicked, then two options may appear: one is an option of temporarily disabling the function plug-in (that is, a function of the plug-in is disabled before the screen is locked), and the other is an option of permanently disabling the function plug-in, and the user can temporarily or permanently disable the function plug-in by the two options.

That is, in order to improve user experience, the mobile equipment may be added with function settings. Main contents are as follows: a) the sensor adopts the acceleration sensor (for example, operation of shaking the mobile equipment with a hand and the like) or the pressure sensor (for example, operation of making circles along the edge of the screen of the mobile equipment and the like), or the system directly selects to enable or disable the function option; b) selection of the position, size and width of the dashed box; and c) dashed box automatic-hiding time 1∼10s. After the selection of the user, the mobile equipment stores the settings into the operating system, and the mobile equipment may read the contents of the settings at any time.

The mobile equipment performs function expansion on view classes, that is, the function plug-in is added. Specifically, an enabling manner for the function plug-in is set by the first option bar. If the acceleration sensor is adopted, the function plug-in is enabled or disabled according to a set manner such as "shaking the mobile equipment with a hand for many times", and if the pressure sensor is selected, the function plug-in is enabled or disabled according to the set manner such as "making a circle along the edge of the screen of the mobile equipment or making two circles in middle of the screen". In addition, position of the dashed box (a misoperation prevention range is selected) and dashed box automatic-hiding time are also required to be set in the second and third option bars respectively. Once the function plug-in is enabled, whether operation of not disabling the function is sensed by a certain pressure sensor in the misoperation area or not is monitored in real time after the screen of the mobile equipment is unlocked, and if the operation of not disabling the function is sensed by the certain pressure sensor, it is indicated that misoperation caused by narrow-edge design may appear and the dashed box is required to be displayed on the screen by virtue of the function plug-in to notify the user. Fig. 6 is a schematic diagram of a dashed box displayed by a plug-in when a misoperation area is triggered according to an embodiment of the present invention, and it needs to be noted that the dashed box is displayed when screen operation which is suspected misoperation appears in the misoperation area after the screen is unlocked and the function plug-in is enabled. The misoperation area, i.e. the misoperation prevention range, is from the outside of the dashed box to the edge of the screen.

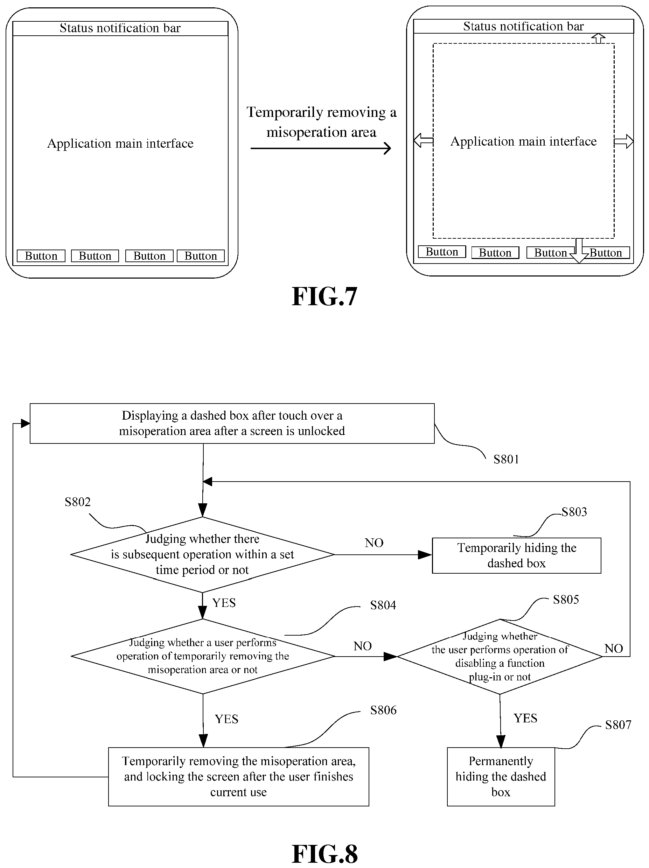

The user may ignore the dashed box displayed by the function plug-in because of exactly misoperation, and specifically, if the user does not operate the dashed box after a preset time period (i.e. the dashed box automatic-hiding time set in the third option bar, for example, 2s), the mobile equipment is triggered to automatically hide the dashed box. The user may further manually eliminate the dashed box through sliding from the dashed box to the edge of the screen, so as to unlock the misoperation area. In such a manner, a limitation of the misoperation area may be broken before the screen is locked, that is, the user may perform full-screen operation, and however, the misoperation area of the function plug-in may be reused after the screen is unlocked next time. Fig. 7 is a schematic diagram of temporal elimination of a misoperation area and full-screen operation according to an embodiment of the present invention. As shown in Fig. 7, a finger clicks and presses a dashed box and slides to the edge of the screen, and in such a manner, the user may perform full-screen operation before the screen is locked. In addition, the user may directly disable the function plug-in in other manners.

Furthermore, if the operation of the user within the preset time period is misoperation, the misoperation area is continuously monitored until the operation is correct or there is no operation for the preset time period.

Fig. 8 is a flowchart of operation after a dashed box appears according to an embodiment of the present invention, and as shown in Fig. 8, the operation includes the following steps:
Step 801: under the condition that mobile equipment is normally operated, when a screen of the mobile equipment is unlocked and a function plug-in is enabled, screen operation which is suspected misoperation is monitored in a misoperation area, and a dashed box is displayed on the screen according to preset contents.
Step 802: a pressure sensor or a acceleration sensor detects whether a user performs subsequent operation within preset time period or not, Step 803 is executed if the user performs no operation within the preset time period , otherwise Step 804 is executed.
Step 803: under such a condition, the operation may be considered as the misoperation, such as misoperation made by at least one palm or finger, caused by a narrow-edge design, and at this time, the dashed box may be temporarily closed to be temporarily hidden.
Step 804: the subsequent operation of the user detected by the pressure sensor or the acceleration sensor is judged whether to be operation of temporarily removing the misoperation area, i.e. operation of temporarily eliminating the misoperation area (as shown in Fig. 7, the finger presses the dashed box and slides to the edge of the screen), or not, Step 806 is executed if the subsequent operation is the operation of temporarily eliminating the misoperation area, otherwise Step 805 is executed.
Step 805: the subsequent operation of the user detected by the pressure sensor or the acceleration sensor is judged whether to be operation of temporarily disabling the function plug-in, i.e. operation of permanently eliminating the misoperation area (operation of shaking the mobile equipment and the like, or the operation of making a circle along the edge of the screen or continuously making two circles and the like), or not, Step 807 is executed if the subsequent operation is the operation of disabling the misoperation area, otherwise Step 802 is executed.
Step 806: the misoperation area is temporarily eliminated, and the screen is locked after the user finishes current use.
Step 807: the dashed box is permanently hidden, that is, the misoperation area is permanently closed, and in such a manner, the dashed box may not appear again during subsequent use of the user until the misoperation area is reopened.

From the above, for the problem that edge parts of screens are easily accidentally operated by at least one finger and palm when existing large-sized touch screen mobile equipment with a narrow-edge design is held, sensors and function plug-ins of the mobile equipment such as smart phones, pads and notebook computers are fully utilized, so that the mobile equipment can be simply and rapidly operated, the misoperation is effectively avoided, and better user experiences are achieved.

## Claims

1. A method for preventing a mobile equipment with a touch screen from misoperation, comprising:
dividing (101) the touch screen of the mobile equipment into a misoperation area and a normal operating area;
when the misoperation area is triggered by a touch operation detected in the misoperation area, displaying, by the mobile equipment, the misoperation area and, detecting (102), by the mobile equipment, a subsequent triggering event within a preset time period;
when the mobile equipment detects the subsequent triggering event within the preset time period, performing (103), by the mobile equipment, corresponding processing according to the subsequent triggering event;
when the mobile equipment does not detect the subsequent triggering event within the preset time period, temporarily hiding (104), by the mobile equipment, the misoperation area, and displaying (104), by the mobile equipment, the misoperation area when the misoperation area is retriggered;
wherein performing, by the mobile equipment, corresponding processing according to the subsequent triggering event comprises:
judging (S804), by the mobile equipment, whether the subsequent triggering event is a triggering event for temporarily eliminating the misoperation area or not; and
when the subsequent triggering event is the triggering event for temporarily eliminating the misoperation area, temporarily closing (S806), by the mobile equipment, the misoperation area to enable a user to perform full-screen operation during a current screen unlocking time period;
judging (S805), by the mobile equipment, whether the subsequent triggering event is a triggering event for permanently eliminating the misoperation area or not; and
when the subsequent triggering event is not the triggering event for temporarily eliminating the misoperation area or the triggering event for permanently eliminating the misoperation area, the mobile equipment does not perform processing of the subsequent triggering event.

2. The method according to claim 1, wherein performing, by the mobile equipment, corresponding processing according to the subsequent triggering event further comprises: when the subsequent triggering event is the triggering event for permanently eliminating the misoperation area, permanently closing, by the mobile equipment, the misoperation area to enable the user to perform full-screen operation during the current screen unlocking time period and subsequent screen unlocking time periods until the misoperation area is reopened.

3. The method according to any one of claims 1 to 2, wherein the misoperation area is an area at a distance of a preset length far away from an edge of the touch screen.

4. A device for preventing a mobile equipment with a touch screen from misoperation, comprising:
a dividing component, configured to divide the touch screen of the mobile equipment into a misoperation area and a normal operating area;
a detection component, configured to detect a subsequent triggering event within a preset time period when the misoperation area is triggered by a touch operation detected in the misoperation area; and
a processing component, configured to display the misoperation area when the misoperation area is triggered by the touch operation detected in the misoperation area, and further configured to perform corresponding processing according to the subsequent triggering event when the subsequent triggering event is detected within the preset time period, and temporarily hide the misoperation area when the subsequent triggering event is not detected within the preset time period, and display the misoperation area when the misoperation area is retriggered;
wherein the processing component comprises:
a first judgment sub-component, configured to judge whether the subsequent triggering event is a triggering event for temporarily eliminating the misoperation area or not; and
a first processing sub-component, configured to temporarily close the misoperation area to enable a user to perform full-screen operation during a current screen unlocking time period when the subsequent triggering event is the triggering event for temporarily eliminating the misoperation area;
a second judgement sub-component, configured to judge whether the subsequent triggering event is a triggering event for permanently eliminating the misoperation area or not; and
a holding sub-component, configured to not perform processing of the subsequent triggering event
when the subsequent triggering event is not the triggering event for temporarily eliminating the misoperation area or the triggering event for permanently eliminating the misoperation area.

5. The device according to claim 4, wherein the processing component further comprises: a second processing sub-component, configured to permanently close the misoperation area to enable the user to perform full-screen operation during the current screen unlocking time period and subsequent screen unlocking time periods until the misoperation area is reopened when the subsequent triggering event is the triggering event for permanently eliminating the misoperation area.

6. The device according to any one of claims 4 to 5, wherein the misoperation area is an area at a distance of a preset length far away from an edge of the touch screen.

## Patentansprüche

1. Verfahren zum Hindern einer mobilen Einrichtung mit einem Berührungsbildschirm an einer Fehlbedienung, das Folgendes umfasst:
Unterteilen (101) des Berührungsbildschirms der mobilen Einrichtung in einen Fehlbedienungsbereich und einen Normalbedienungsbereich;
wenn der Fehlbedienungsbereich durch eine Berührungsbedienung ausgelöst wird, die in dem Fehlbedienungsbereich erfasst wird, Anzeigen, durch die mobile Einrichtung, des Fehlbedienungsbereichs und Erfassen (102), durch die mobile Einrichtung, eines nachfolgenden Auslöseereignisses innerhalb einer voreingestellten Zeitspanne;
wenn die mobile Einrichtung das nachfolgende Auslöseereignis innerhalb der voreingestellten Zeitspanne erfasst, Durchführen (103), durch die mobile Einrichtung, eines entsprechenden Verarbeitens gemäß dem nachfolgenden Auslöseereignis;
wenn die mobile Einrichtung das nachfolgende Auslöseereignis innerhalb der voreingestellten Zeitspanne nicht erfasst, vorübergehendes Verbergen (104), durch die mobile Einrichtung, des Fehlbedienungsbereichs und Anzeigen (104), durch die mobile Einrichtung, des Fehlbedienungsbereichs, wenn der Fehlbedienungsbereich erneut ausgelöst wird;
wobei das Durchführen, durch die mobile Einrichtung, des entsprechenden Verarbeitens gemäß dem nachfolgenden Auslöseereignis Folgendes umfasst:
Beurteilen (S804), durch die mobile Einrichtung, ob das nachfolgende Auslöseereignis ein Auslöseereignis zum vorübergehenden Ausschalten des Fehlbedienungsbereichs ist oder nicht; und
wenn das nachfolgende Auslöseereignis das Auslöseereignis zum vorübergehenden Ausschalten des Fehlbedienungsbereichs ist, vorübergehendes Schließen (S806), durch die mobile Einrichtung, des Fehlbedienungsbereichs, um es einem Benutzer zu ermöglichen, eine Vollbildbedienung während einer aktuellen Bildschirmentsperrungszeitspanne durchzuführen;
Beurteilen (S805), durch die mobile Einrichtung, ob das nachfolgende Auslöseereignis ein Auslöseereignis zum dauerhaften Ausschalten des Fehlbedienungsbereichs ist oder nicht; und
wenn das nachfolgende Auslöseereignis nicht das Auslöseereignis zum vorübergehenden Ausschalten des Fehlbedienungsbereichs oder das Auslöseereignis zum dauerhaften Ausschalten des Fehlbedienungsbereichs ist, die mobile Einrichtung kein Verarbeiten des nachfolgenden Auslöseereignisses durchführt.

2. Verfahren nach Anspruch 1, wobei das Durchführen, durch die mobile Einrichtung, des entsprechenden Verarbeitens gemäß dem nachfolgenden Auslöseereignis ferner Folgendes umfasst:
wenn das nachfolgende Auslöseereignis das Auslöseereignis zum dauerhaften Ausschalten des Fehlbedienungsbereichs ist, dauerhaftes Schließen, durch die mobile Einrichtung, des Fehlbedienungsbereichs, um es dem Benutzer zu ermöglichen, während der aktuellen Bildschirmentsperrungszeitspanne und nachfolgender Bildschirmentsperrungszeitspannen die Vollbildbedienung durchzuführen, bis der Fehlbedienungsbereich erneut geöffnet wird.

3. Verfahren nach einem der Ansprüche 1 bis 2, wobei der Fehlbedienungsbereich ein Bereich in einem Abstand einer voreingestellten Länge weit von einer Kante des Berührungsbildschirms entfernt ist.

4. Vorrichtung zum Hindern einer mobilen Einrichtung mit einem Berührungsbildschirm an der Fehlbedienung, die Folgendes umfasst:
eine Unterteilungskomponente, die konfiguriert ist, um den Berührungsbildschirm der mobilen Einrichtung in einen Fehlbedienungsbereich und einen Normalbedienungsbereich zu unterteilen;
eine Erfassungskomponente, die konfiguriert ist, um ein nachfolgendes Auslöseereignis innerhalb einer voreingestellten Zeitspanne zu erfassen, wenn der Fehlbedienungsbereich durch eine Berührungsbedienung ausgelöst wird, die in dem Fehlbedienungsbereich erfasst wird; und
eine Verarbeitungskomponente, die konfiguriert ist, um den Fehlbedienungsbereich anzuzeigen, wenn der Fehlbedienungsbereich durch die Berührungsbedienung ausgelöst wird, die in dem Fehlbedienungsbereich erfasst wird, und ferner konfiguriert ist, um ein entsprechendes Verarbeiten gemäß dem nachfolgenden Auslöseereignis durchzuführen, wenn das nachfolgende Auslöseereignis innerhalb der voreingestellten Zeitspanne erfasst wird, und den Fehlbedienungsbereich vorübergehend zu verbergen, wenn das nachfolgende Auslöseereignis innerhalb der voreingestellten Zeitspanne nicht erfasst wird, und den Fehlbedienungsbereich anzuzeigen, wenn der Fehlbedienungsbereich erneut ausgelöst wird;
wobei die Verarbeitungskomponente Folgendes umfasst:
eine erste Beurteilungsunterkomponente, die konfiguriert ist, um zu beurteilen, ob das nachfolgende Auslöseereignis ein Auslöseereignis zum vorübergehenden Ausschalten des Fehlbedienungsbereichs ist oder nicht; und
eine erste Verarbeitungsunterkomponente, die konfiguriert ist, um den Fehlbedienungsbereich vorübergehend zu schließen, um es einem Benutzer zu ermöglichen, die Vollbildbedienung während einer aktuellen Bildschirmentsperrungszeitspanne durchzuführen, wenn das nachfolgende Auslöseereignis das Auslöseereignis zum vorübergehenden Ausschalten des Fehlbedienungsbereichs ist;
eine zweite Bewertungsunterkomponente, die konfiguriert ist, um zu beurteilen, ob das nachfolgende Auslöseereignis ein Auslöseereignis zum dauerhaften Ausschalten des Fehlbedienungsbereichs ist oder nicht; und
eine Halteunterkomponente, die konfiguriert ist, um das Verarbeiten des nachfolgenden Auslöseereignisses nicht durchzuführen, wenn das nachfolgende Auslöseereignis nicht das Auslöseereignis zum vorübergehenden Ausschalten des Fehlbedienungsbereichs oder das Auslöseereignis zum dauerhaften Ausschalten des Fehlbedienungsbereichs ist.

5. Vorrichtung nach Anspruch 4, wobei die Verarbeitungskomponente ferner Folgendes umfasst:
eine zweite Verarbeitungsunterkomponente, die konfiguriert ist, um den Fehlbedienungsbereich dauerhaft zu schließen, um es dem Benutzer zu ermöglichen, die Vollbildbedienung während der aktuellen Bildschirmentsperrungszeitspanne und nachfolgender Bildschirmentsperrungszeitspannen durchzuführen, bis der Fehlbedienungsbereich erneut geöffnet wird, wenn das nachfolgende Auslöseereignis das Auslöseereignis zum dauerhaften Ausschalten des Fehlbedienungsbereichs ist.

6. Vorrichtung nach einem der Ansprüche 4 bis 5, wobei der Fehlbedienungsbereich ein Bereich in einem Abstand einer voreingestellten Länge weit von einer Kante des Berührungsbildschirms entfernt ist.

## Revendications

1. Procédé destiné à empêcher un équipement mobile avec un écran tactile de dysfonctionner, comprenant :
la division (101) de l'écran tactile de l'équipement mobile en une zone de dysfonctionnement et une zone de fonctionnement normal ;
lorsque la zone de dysfonctionnement est déclenchée par une opération tactile détectée dans la zone de dysfonctionnement, l'affichage, par l'équipement mobile, de la zone de dysfonctionnement et, la détection (102), par l'équipement mobile, d'un événement de déclenchement ultérieur dans une période de temps prédéfinie ;
lorsque l'équipement mobile détecte l'événement de déclenchement ultérieur dans la période de temps prédéfinie, la réalisation (103), par l'équipement mobile, d'un traitement correspondant en fonction de l'événement de déclenchement ultérieur ;
lorsque l'équipement mobile ne détecte pas l'événement déclencheur ultérieur dans la période de temps prédéfinie, le masquage temporaire (104), par l'équipement mobile, de la zone de dysfonctionnement, et l'affichage (104), par l'équipement mobile, de la zone de dysfonctionnement lorsque la zone de dysfonctionnement est redéclenchée ;
l'exécution, par l'équipement mobile, du traitement correspondant selon l'événement déclencheur ultérieur comprenant :
l'évaluation (S804), par l'équipement mobile, du fait de savoir si l'événement déclencheur ultérieur est un événement déclencheur pour éliminer temporairement la zone de dysfonctionnement ou non ; et
lorsque l'événement déclencheur ultérieur est l'événement déclencheur pour éliminer temporairement la zone de dysfonctionnement, la fermeture temporaire (S806),
par l'équipement mobile, de la zone de dysfonctionnement pour permettre à un utilisateur de réaliser une opération en plein écran pendant une période de temps de déverrouillage d'écran actuelle ;
l'évaluation (S805), par l'équipement mobile, du fait de savoir si l'événement déclencheur ultérieur est un événement déclencheur pour éliminer de manière permanente la zone de dysfonctionnement ou non ; et
lorsque l'événement déclencheur ultérieur n'est pas l'événement déclencheur destiné à éliminer temporairement la zone de dysfonctionnement ou l'événement déclencheur pour éliminer de manière permanente la zone de dysfonctionnement, l'équipement mobile ne réalise pas de traitement de l'événement déclencheur ultérieur.

2. Procédé selon la revendication 1, la réalisation, par l'équipement mobile, du traitement correspondant selon l'événement déclencheur ultérieur comprenant en outre :
lorsque l'événement déclencheur ultérieur est l'événement déclencheur destiné à éliminer de manière permanente la zone de dysfonctionnement, la fermeture permanente, par l'équipement mobile, de la zone de dysfonctionnement pour permettre à l'utilisateur de réaliser une opération en plein écran pendant la période de temps de déverrouillage de l'écran actuelle et les périodes de temps de déverrouillage de l'écran suivantes jusqu'à ce que la zone de non-fonctionnement soit rouverte.

3. Procédé selon l'une quelconque des revendications 1 à 2, la zone de dysfonctionnement étant une zone à une distance d'une longueur prédéfinie éloignée d'un bord de l'écran tactile.

4. Dispositif pour empêcher un équipement mobile avec un écran tactile de dysfonctionner, comprenant :
un composant de division, configuré pour diviser l'écran tactile de l'équipement mobile en une zone de dysfonctionnement et une zone de fonctionnement normal ;
un composant de détection, configuré pour détecter un événement de déclenchement ultérieur dans une période de temps prédéfinie lorsque la zone de dysfonctionnement est déclenchée par une opération tactile détectée dans la zone de dysfonctionnement ; et
un composant de traitement, configuré pour afficher la zone de dysfonctionnement lorsque la zone de dysfonctionnement est déclenchée par l'opération tactile détectée dans la zone de dysfonctionnement, et configuré en outre pour réaliser un traitement correspondant selon l'événement de déclenchement ultérieur lorsque l'événement de déclenchement ultérieur est détecté dans le temps prédéfini période, et cacher temporairement la zone de dysfonctionnement lorsque l'événement de déclenchement ultérieur n'est pas détecté dans la période de temps prédéfinie, et afficher la zone de dysfonctionnement lorsque la zone de dysfonctionnement est redéclenchée ;
le composant de traitement comprenant :
un premier sous-composant d'évaluation, configuré pour évaluer si l'événement déclencheur ultérieur est un événement déclencheur destiné à éliminer temporairement la zone de dysfonctionnement ou non ; et
un premier sous-composant de traitement, configuré pour fermer temporairement la zone de dysfonctionnement pour permettre à un utilisateur de réaliser une opération en plein écran pendant une période de temps de déverrouillage d'écran actuelle lorsque l'événement de déclenchement ultérieur est l'événement de déclenchement destiné à éliminer temporairement la zone de dysfonctionnement ;
un second sous-composant d'évaluation, configuré pour évaluer si l'événement déclencheur ultérieur est un événement déclencheur destiné à éliminer de manière permanente la zone de dysfonctionnement ou non ; et
un sous-composant de maintien, configuré pour ne pas réaliser le traitement de l'événement déclencheur ultérieur
lorsque l'événement déclencheur ultérieur n'est pas l'événement déclencheur pour éliminer temporairement la zone de dysfonctionnement ou l'événement déclencheur pour éliminer de manière permanente la zone de dysfonctionnement.

5. Dispositif selon la revendication 4, le composant de traitement comprenant en outre :
un second sous-composant de traitement, configuré pour fermer de manière permanente la zone de dysfonctionnement pour permettre à l'utilisateur de réaliser une opération en plein écran pendant la période de temps de déverrouillage de l'écran actuelle et les périodes de temps de déverrouillage d'écran suivantes jusqu'à ce que la zone de dysfonctionnement soit rouverte lorsque l'événement de déclenchement ultérieur est l'événement déclencheur pour éliminer définitivement la zone de dysfonctionnement.

6. Dispositif selon l'une quelconque des revendications 4 à 5, la zone de dysfonctionnement étant une zone à une distance d'une longueur prédéfinie éloignée d'un bord de l'écran tactile.
